# EUROPEAN PATENT APPLICATION

(11) **EP 2 889 186 A1**
(43) Date of publication of application: **01.07.2015**
(21) Application number: 13199625.8
(22) Date of filing: 27.12.2013
(51) Int. Cl.: B60R 16/027, B62D 15/02, G01D 5/347, G08B 21/06

(54) **A driver drowsiness detection and alerting system**

(71) Applicant: Demerstee Transport Solutions bvba, 3290 Diest (BE)
(72) Inventor: Van Winckel, Ronald, 3270 Scherpenheuvel (BE); Van Winckel, Jelle, 3270 Scherpenheuvel (BE); Convents, Andre, 1831 Diegem (BE); Dietvorst, Thomas, 2531 Vremde (BE); Van de Casseye, Rohny, 1560 Hoeilaart (BE)
(74) Representative: BiiP cvba

(57) **Abstract**

The present invention relates to a driver drowsiness detection and alerting system comprising a plurality of marks in ring configuration around an exterior cylindrical surface of a vehicle's steering wheel column assembly, and an optical sensor assembly near the plurality of marks for detecting movement of the marks, the optical sensor assembly connected to a means for alerting the driver if the steering wheel does not move for a prescribed time period while the motor vehicle is moving, characterized in that the optical sensor assembly comprises a optical detector and a light emitter adjacent to each other. Additionally, the present invention relates to a kit of parts for such driver drowsiness detection and alerting system.

## Description

### FIELD OF THE INVENTION

The present invention relates to a driver drowsiness detection and alerting system. Additionally, the present invention relates to a kit of parts for such driver drowsiness detection and alerting system.

### BACKGROUND OF THE INVENTION

Bus or truck drivers suffering from drowsiness (also called somnolence or sleepiness) are known to be a severe problem causing a significant number of fatal accidents.

In the state-of-art many attempts for solving this problem by means of a driver drowsiness detection and alerting system are known. Most of these systems are based on that fact that, even when driving in straight line, drivers of big vehicles such as busses and trucks are forced to continuously correct the travel direction by making mostly minimal movements of the steering wheel. The driver is alerted by audio and/ or visual signals when the system does not detect movements for a prescribed period of time, assuming the driver suffers from drowsiness.

Conventional driver drowsiness detection and alerting systems, as for example described in US2004113800, use a plurality of marks on an optic tape around the exterior cylindrical surface of the steering column, and a light emitter and electro-optical sensor near the plurality of marks for detecting movement of the marks. When there is no movement of the steering wheel for a prescribed period of time, the driver is alerted.

A first problem of these conventional systems is that, since light emitted towards the steering column and reflected by either the marks, either the surface between the marks, is to be detected by the detector and since for practical reasons the emitter and the detector are mounted under a certain angle with respect to each other, both the emitter and the detector need to be in focus. Obviously bringing both the emitter and the detector in focus during installation is not easy. Moreover, the vehicle's vibration may result in dramatic decrease of measurement accuracy.

Another problem of those conventional systems is that, since the electro-optical sensor requires electrical supply and since it is mounted very near to the steering column, the sensor is sensitive to electrical interference, humidity and temperature intervals. Further, electrical supply near the steering column may initiate safety problems.

An additional problem is that, since the distance between the electro-optical sensor and the cockpit is significant, amplifiers are required in order to obtain useful signals at the cockpit for triggering the alerting system.

Considering the above drawbacks, as a first object the present invention provides a driver drowsiness detection and alerting system less suffering from focus problems and more resistant against vibrations, resulting in improved measurement accuracy.

It is a second object of the present invention to provide a driver drowsiness detection and alerting system that is less sensitive to electrical interference, humidity and temperature intervals.

Another object of the present invention is to provide a driver drowsiness detection and alerting system reaching higher safety standards.

Still another object of the present invention is to provide a driver drowsiness detection and alerting system having less severe or even minimal amplification requirements.

A general object of the present invention is to provide a driver drowsiness detection and alerting system being sufficiently accurate to alert the driver in time to correct dangerous situations, preferably upon deviating less than 1 meter at a driving speed of 100km/h.

An additional object of the present invention is to provide a driver drowsiness detection and alerting system developed for the after market and designed in a kit which can be installed within 30 minutes in large vehicles (trucks and busses) without modification of the vehicle construction, while sufficiently fulfilling accuracy and safety requirements.

The present invention meets the above objects by using an optical sensor assembly comprising an optical detector and a light emitter adjacent to each other.

### SUMMARY OF THE INVENTION

The present invention is directed to a driver drowsiness detection and alerting system comprising a plurality of marks in ring configuration around an exterior cylindrical surface of a vehicle's steering wheel column assembly, and an optical sensor assembly near the plurality of marks for detecting movement of the marks, the optical sensor assembly connected to a means for alerting the driver if the steering wheel does not move for a prescribed time period while the motor vehicle is moving,
characterized in that the optical sensor assembly comprises a optical detector and a light emitter adjacent to each other.

Additionally, the present invention is directed to a kit of parts for such driver drowsiness detection and alerting system.

### BRIEF DESCRIPTION OF THE DRAWINGS

FIG 1 illustrates a driver drowsiness detection and alerting system in accordance with the present invention.
FIG 2 illustrates a ring configuration for a driver drowsiness and alerting system in accordance with an embodiment of the present invention
FIG 3 illustrates a ring configuration for a driver drowsiness and alerting system in accordance with an embodiment of the present invention

### DESCRIPTION OF THE INVENTION

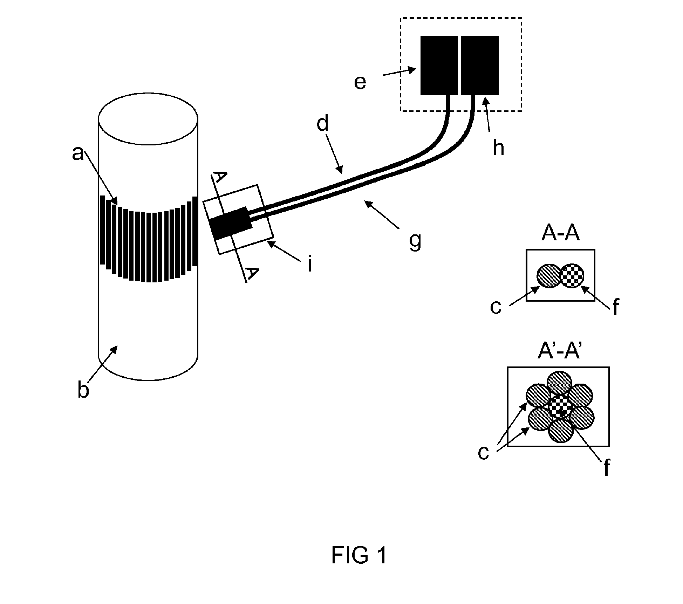

According to a first embodiment of the present invention and as illustrated in FIG 1, a driver drowsiness detection and alerting system comprising a plurality of marks in ring configuration (a) around an exterior cylindrical surface of a vehicle's steering wheel column assembly (b), and an optical sensor assembly (c, d, e, f, g, h, i) near the plurality of marks for detecting movement of the marks, the optical sensor assembly connected to a means for alerting the driver if the steering wheel does not move for a prescribed time period while the motor vehicle is moving,
characterized in that the optical sensor assembly comprises a optical detector (c) and a light emitter (f) adjacent to each other.

By using an optical sensor assembly comprising an optical detector and a light emitter adjacent to each other (as shown in cross-section A-A), focusing both detector and light emitter may be less difficult and may require less accuracy compared to conventional systems. Moreover, since both detector and emitter are adjacent to each other, its movements due to vehicle vibrations will be synchronal, resulting in improved measurement accuracy.

In an embodiment in accordance with the present invention, the light emitter may be surrounded by the optical detector or a plurality of optical detectors (as shown in cross section A'-A'), and vice versa. When using an emitter surrounded by detectors, and vice versa, the detector and the emitter(s) may not even need to be focused separately and may be even more resistant against vehicle vibrations, in particular when detector and emitter(s) are fixed to each other.

In accordance with the present invention, the optical detector used may be a grayscale detector, such that distinction can be made between the marks and dirt or other undesired substances present on the ring configuration of marks.

In an embodiment according to the present invention, the optical detector may an infrared (IR) detector and the light emitter may be an infrared (IR) emitter. The wavelengths used may be from 400 to 1650 nm, or between 600 and 1100 nm, or preferably between 800 and 1000 nm.

In a particular embodiment in accordance with the present invention, the optical sensor assembly may be a fiber optic sensor assembly. Because at the sensing point, - in this case close to the marks on the exterior cylindrical surface of a part of the steering wheel column-, optical fiber is used which is essentially a passive, mechanical component not containing moving parts neither electrical circuitry, such fiber optic sensor assembly may be more immune to electrical interference, humidity and temperature intervals. Further, because of the absence of electrical circuitry at the sensing point, there is no risk of sparks or electrical shocks (during installation or repair), such that high safety levels may be obtained.

Preferably, such fiber optic sensor assembly may be an extrinsic fiber optic sensor assembly, i.e. the fiber function as a means of relaying signals from a remote sensing point to the electronics that process the signals. This makes such extrinsic fiber optic sensor assembly a preferred assembly to isolate the fiber optic sensor assembly electronics (in this case the remote sensor to which it connects) from electrical interference, humidity and temperature intervals. Additionally, the fiber optic sensor assembly electronics may be installed closer or in the cockpit, such that the use of signal amplifiers may be decreased or even avoided.

In an even more preferred embodiment as also shown in FIG 1, a bifurcated fiber optic sensor assembly may be used combining the emitter (f) and the detector (c) or the plurality of detector fibers into a compact sensing head (i). When the marks are in front of the sensing head, light from the emitter electronics (h) reflects via the emitter fiber (g) on the marks (a) (or on the space between the marks) and back into the detector fiber(s) (d) again towards the detector electronics (e).

Alternatively, the emitter and detector fibers are positioned opposite to each other. Sensing is achieved when the light beam extending from the emitter fiber to the detector fiber is interrupted by the marks. In this case, the ring configuration of marks requires to be fixed on a transparent carrier attached to the steering column.

In an embodiment in accordance with the present invention, the plurality of marks in ring configuration around an exterior cylindrical surface of the vehicle's steering wheel column assembly may be located on a ring or disk mounted on a part of the steering column. Particularly, the ring configuration may be provided on a disk fixed around the steering column perpendicularly to the column's axis.

The ring configuration may have a diameter from 40 to 100 mm, or from 50 to 90 mm, or preferably from 60 to 80 mm. Combining such diameter with an optical sensor assembly as used in the above described embodiments may result in a driver drowsiness detection and alerting system being sufficiently accurate to alert the driver in time to correct dangerous situations, preferably upon deviating less than 1 meter at a driving speed of 100km/h.

The marks may have a mutual distance of less than 4 mm, or less than 2 mm, or about 1 mm, and have a width or diameter of less 4 mm, or less than 2 mm, or about 1 mm, while the optical sensor assembly may have a resolution of less than 1 mm, less than 0,5 mm, or less than 0,25 mm, i.e. the spot size of the emitted light beam to be detected by the detector may be less than 1 mm, less than 0,5 mm, or less than 0,25 mm.

The distance between the optical detector and plurality of marks may be less than 10 mm, less than 4 mm, or even less than 1 mm.

In a particular embodiment of the present invention, the ring configuration of marks has a diameter of 80 mm. The marks have a width of 1 mm and a mutual distance of 1 mm, and the optical sensor assembly has a resolution of 0,25mm. This combination results in a measurement of steering column movement angle with an accuracy of 1°25", which is a significant improvement compared to conventional systems.

In an embodiment according to the present invention, the ring configuration as described above, may be adapted in such a way that it can be mounted on steering columns of different diameters.

In a further embodiment according to the present invention, the ring configuration may be mounted on the cylindrical surface of the steering column by means of claws, clamps or arms positioned in such a way that they can perform a gripping movement or they can engage on the steering column. For example a gear system may be used for actuating said claws, clamps or arms. The number of claws, clamps or arms may vary between 2 and 10, or between 2 and 8, or between 2 and 6.

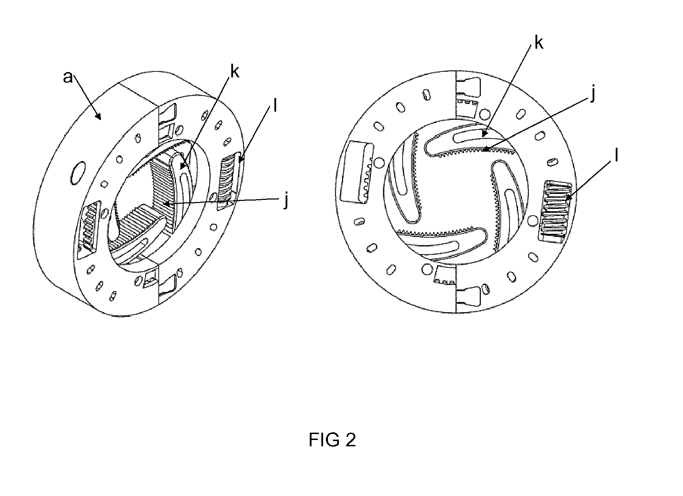

In a preferred embodiment according to the present invention the mounting system may comprise a plurality of claws (k) (shown in FIG 2) on the interior side of said ring configuration, facing the steering column.

In the specific embodiment shown in FIG 2, 4 claws are used. Further, said claws (k) can be actuated by a gear system comprising a screw or a wheel or a worm drive system (l). They may further comprise a plurality of teeth (j) facing the cylindrical surface of the steering column for better fixing and adhering to said surface of the steering column. The teeth (j) may be manufactured from different types of materials, like for example and not limiting to: any type of rubber, metal, plastic or a combination thereof.

The ring configuration can vary from 40 to 100 mm, or from 50 to 90 mm, or preferably from 60 to 80 mm. Further, it will be suitable for mounting on steering columns of

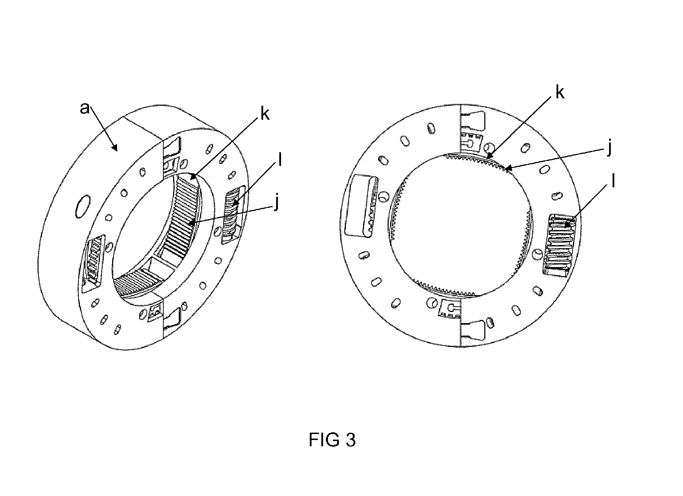

Figure 3 shows a device according to the present invention having the claws (k) actuated at a maximum. By varying the position or the angle of the claws (k), the device described herein can be used on different types of vehicles, having different diameters of the steering column. Therefore manufacturing processes and costs of devices according to the present invention can be reduced by having only one device suitable for different types of vehicles.

Additionally, the driver drowsiness detection and alerting system may additionally comprise a wheel sensor means adjacent to a wheel hub for sensing the wheel movements.

An driver drowsiness detection and alerting system in accordance with the present invention may additionally comprising a controller means suitable for memorizing steer wheel movement data, building a driver's behavior profile based on the movement data, and adapting the alert conditions. Such controller means may develop a base line for normal steering correcting, dependent on vehicle and/or driver behavior, by determining the mean moving angles of the steering column while driving on straight lanes and by determining the mean time interval between each correction.

The driver drowsiness detection and alerting system may be activated above 60 km/h and may have a dual means for alerting the driver. Upon detecting a steering column movement angle of at least 3°75", preferably at least 2°50", and most preferably at least 1°25", a first timer may be activated triggering a first alarm, preferably visual, that will be activated if there is a lack of steering column movement during a first time period of 5 seconds, preferably 3 seconds and most preferably 2 seconds. Upon the driver's failure to move the steering wheel within that period, a second timer starts to run. Upon the driver's failure to move the steering wheel within a second time period of 5 seconds, preferably 3 seconds and most preferably 2 seconds, a second alarm, preferably audio, may be activated.

Additionally, in an embodiment in accordance with the present invention, a kit of parts for a driver drowsiness detection and alerting system is provided comprising:
- a carrier bearing a plurality of marks for attaching around an exterior cylindrical surface of a part of a vehicle's steering wheel column assembly,
- an optical sensor assembly for mounting near the plurality of marks, said optical sensor assembly adapted for detecting movement of the marks and for being connected to a means for alerting the driver if the steering wheel does not move for a prescribed time period while the motor vehicle is moving,
characterized in that the optical sensor assembly comprises a optical detector and a light emitter adjacent to each other.

By using an optical sensor assembly comprising a optical detector and a light emitter adjacent to each other, during installation focusing problems may be decreased or even minimized, such that the system may be installed within 30 minutes in large vehicles (trucks and busses) without modification of the vehicle construction, while sufficiently fulfilling accuracy and safety requirements.

In an embodiment according to the present invention, the carrier may comprise a tape bearing a plurality of marks. Such tape can be easily glued to the steering column to form a ring configuration, or can be self-adhesive.

Alternatively, the carrier may comprise a ring or disk bearing the marks to be fixed to the exterior cylindrical surface of a vehicle's steering wheel column assembly. Obviously, both tape and ring or disk may be provided in the kit of parts such that upon installation of the system the tape may be fixed on the ring or disk. The ring or disk may have a diameter from 40 to 100 mm, or from 50 to 90 mm, or preferably from 60 to 80 mm.

In an embodiment according to the present invention, the optical sensor assembly may comprise an IR emitter and an IR detector. Preferably, the optical sensor assembly may be a fiber optic sensor assembly, resulting in a system having the advantageous as described earlier.

Further, such kit of parts may additionally comprise the means for alerting the driver, such as audio and/or visual alarms for installing in the cockpit.

Further, such kit of parts may additionally comprise a wheel sensor means to be installed on a wheel hub for sensing the wheel movements.

## Claims

1. A driver drowsiness detection and alerting system comprising a plurality of marks in ring configuration around an exterior cylindrical surface of a vehicle's steering wheel column assembly, and an optical sensor assembly near the plurality of marks for detecting movement of the marks, the optical sensor assembly connected to a means for alerting the driver if the steering wheel does not move for a prescribed time period while the motor vehicle is moving,
**characterized in that** the optical sensor assembly comprises a optical detector and a light emitter adjacent to each other.

2. A driver drowsiness detection and alerting system according to claim 1, wherein the light emitter is surrounded by the optical detector or a plurality of optical detectors.

3. A driver drowsiness detection and alerting system according to claim 1 or 2, wherein the optical detector is a grayscale detector.

4. A driver drowsiness detection and alerting system according to any of the above, wherein the optical detector is an IR detector and the light emitter is an IR emitter.

5. A driver drowsiness detection and alerting system according to claim 4, wherein the optical sensor assembly is a fiber optic sensor assembly.

6. A driver drowsiness detection and alerting system according to claim 5, wherein the optical sensor assembly is an extrinsic fiber optic sensor assembly.

7. A driver drowsiness detection and alerting system according to any of the above, wherein the ring configuration has a diameter from 60 to 80 mm.

8. A driver drowsiness detection and alerting system according to any of the above, additionally comprising a wheel sensor means adjacent to a wheel hub for sensing the wheel movements.

9. A driver drowsiness detection and alerting system according to any of the above, additionally comprising a controller means suitable for memorizing steer wheel movement data, building a driver's behavior profile based on the movement data, and adapting the alert conditions.

10. A kit of parts for a driver drowsiness detection and alerting system comprising:
- a carrier bearing a plurality of marks to be fixed around an exterior cylindrical surface of a part of a vehicle's steering wheel column assembly,
- an optical sensor assembly for mounting near the plurality of marks, said optical sensor assembly adapted for detecting movement of the marks and for being connected to a means for alerting the driver if the steering wheel does not move for a prescribed time period while the motor vehicle is moving,
**characterized in that** the optical sensor assembly comprises a optical detector and a light emitter adjacent to each other.

11. A kit of parts for a driver drowsiness detection and alerting system according to claim 10, wherein the carrier comprises a tape bearing a plurality of marks to be fixed in ring configuration.

12. A kit of parts for a driver drowsiness detection and alerting system according to claims 10 to 11, wherein the carrier comprises a ring or disk to be fixed to the exterior cylindrical surface of a vehicle's steering wheel column assembly.

13. A kit of parts for a driver drowsiness detection and alerting system according to claims 10 to 12, wherein the carrier comprises means of engaging different diameters of steering wheel columns.

14. A kit of parts for a driver drowsiness detection and alerting system according to claims 12, wherein the ring or disk has a diameter from 60 to 80 mm.

15. A kit of parts for a driver drowsiness detection and alerting system according to claims 10 to 13, further comprising the means for alerting the driver.
